# EUROPEAN PATENT APPLICATION

(11) **EP 1 209 781 A2**
(43) Date of publication of application: **29.05.2002**
(21) Application number: 01309071.7
(22) Date of filing: 25.10.2001
(51) Int. Cl.: H01S 3/094

(54) **Laser diode excitation slab type solid-state laser**

(30) Priority: 26.10.2000 JP 2000326755
(71) Applicant: Fanuc Ltd, Minamitsuru-gun, Yamanashi 401-0597 (JP)
(72) Inventor: Iehisa, Nobuaki, Mishima-shi, Shizuoka 411-0026 (JP); Sato, Masao, Minamitsuru-gun, Yamanashi 401-0511 (JP); Naito, Shinya, Minamitsuru-gun, Yamanashi 401-0511 (JP)
(74) Representative: Billington, Lawrence Emlyn

(57) **Abstract**

A laser diode excitation slab type solid-state laser has a window (10) formed at a portion in a reflecting surface (4) that surrounds a slab type solid-state laser oscillating medium (1), filler strips (5), and a flow tube (7). A laser diode (2) is disposed outside the region surrounded by the reflecting surface (4). Excitation light emitted from the laser diode (2) is injected into the region surrounded by the reflecting surface (4) through a condenser lens (9) and the window (10).

## Description

The present invention relates to an LD excitation slab type solid-state laser that is mounted on a laser beam machining apparatus or the like for use.

Recently, solid-state lasers such as a YAG laser are used in laser beam machining apparatus for cutting or welding metal or nonmetal materials, for example. In addition to lamps conventionally used, a semiconductor laser (also referred to as a laser diode, which is hereinafter abbreviated to LD) has come to be used as an excitation source for a laser oscillating medium.

Solid-state lasers are broadly divided into three types in terms of the shape of the laser oscillating medium used: slab type; rod type; and disk type. The slab type can provide a higher power from a single laser crystal than the rod and disk types, and therefore, is often used in applications requiring a high power laser light in particular.

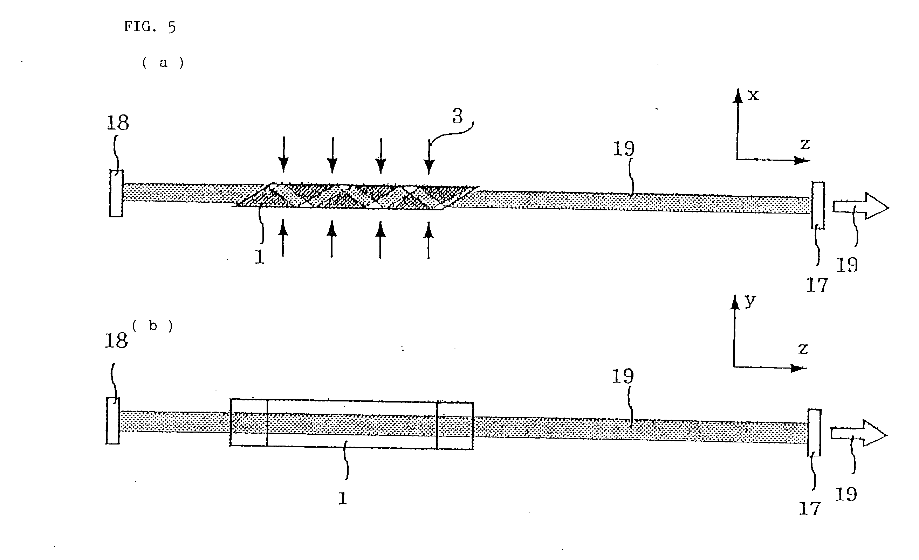

As is well known, a slab type laser crystal has an advantage in that quality of a laser can be enhanced by forming an optical path within the laser crystal in a zigzag manner. Fig. 5 shows a basic arrangement of a slab type solid-state laser for illustrating this advantage. Fig. 5(a) is a cross-sectional view taken in a thickness direction, and Fig. 5(b)is a cross-sectional view taken in a width direction.

A slab type solid-state laser oscillating medium 1 disposed in an optical resonator between an output mirror 17 and a rear mirror 18 is excited by excitation light 3 (shown as a group of arrows) to generate laser light 19, which oscillates back and forth many times between the output mirror 17 and the rear mirror 18. In the course of this process, part of the light is extracted via the output mirror 17 as output laser light.

As shown in Fig. 5(a), the zigzag optical path is formed in a plane of the cross-section in the thickness direction (±x axis direction) of the laser oscillating medium 1, so that a distribution of refractive index (gradient of refractive index) occurring in the same direction (±x axis direction) can be cancelled and the quality of beam can be kept high for the same direction (±x axis direction).

On the other hand, as for the width direction (±y axis direction), the gradient of refractive index due to a temperature gradient occurring in the same direction (±y axis direction) can be controlled by disposing heat insulators of a material having a thermal conductivity significantly lower than that of the laser medium at both ends in the width direction, thereby acceptably enhancing the quality of beam in the same direction (±y axis direction).

In the case where an Nd YAG crystal is used as the laser medium, a quartz, which has a thermal conductivity of about one-tenth that of the Nd YAG crystal, is used as the material to come into contact with the both ends in the width direction of the laser medium, for example. However, it is not easy to actually make the temperature distribution uniform throughout the width direction only by this means. Any lack of uniformity in the temperature distribution in the width direction would cause a thermal lens effect (an effect of bending an optical path according to the distribution of refractive index due to the temperature gradient) so that the quality and power of the beam are degraded.

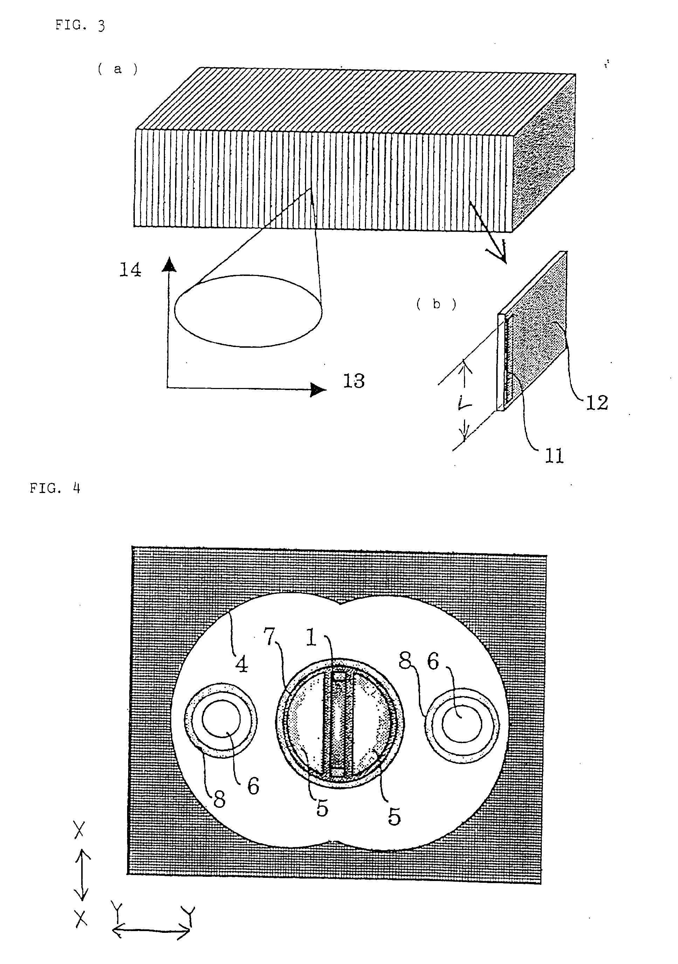

A conventional lamp excitation type solid-state laser adopts a configuration shown in a cross-sectional view of Fig. 4. That is, an excitation lamp 6 is housed in a lamp flow tube 8 for cooling a lamp, a flow tube 7 is filled with a pair of filler strips 5, 5 for cooling a laser oscillating medium, each having substantially a semi-cylindrical shape, so that they are disposed on both sides of a slab type laser oscillating medium 1 in the thickness direction (Y-Y direction), and the medium 1 and the pair of the filler strips 5, 5 are confined in a housing with a reflecting surface 4 of a high reflectance.

In the case of such a configuration, the temperature distribution of the laser oscillating medium 1 in the width direction (X-X direction in Fig. 4) is flattened by the cooperation between the design of the shape of the cross section of the reflecting surface 4 and characteristic of the excitation light that it spreads radially from the lamp 6. Fig. 4 illustrates a case in which the reflecting surface 4 has a cross section like that of a fruit.

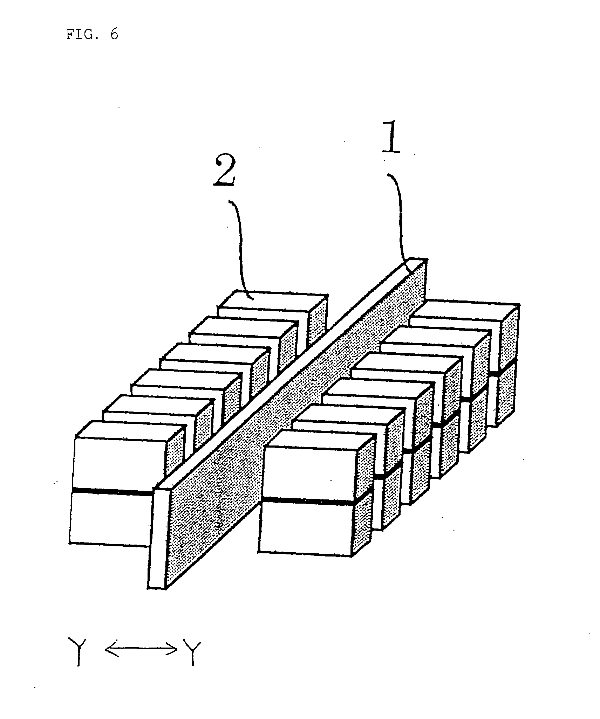

On the contrary, in the case of the LD excitation type solid-state laser, as generally shown in Fig. 6, a plurality of LDs 2 are disposed on both sides in the thickness direction (Y-Y direction) of the slab type solid-state laser oscillating medium 1 so as to be spaced uniformly and as close to each other as possible. Further, the distance between the medium 1 and the LDs 2 is made small as far as possible. Actually, however, the slab type solid-state laser in the kW class requires cooling of the slab type solid-state laser oscillating medium 1 with water, and therefore has a cylindrical or rectangular flow tube for water cooling between the medium 1 and the LDs 2. As a result, the narrowest possible interval between the medium 1 and the LDs 2 is of the order of several millimeters. In such a configuration, it is possible to approximately estimate that the excitation light of the LDs 2 is emitted from a wide light-emitting surface. Therefore, it can be considered that an excitation distribution in the medium 1 is determined dependent upon the distribution of the light emission intensity in the light-emitting surface.

In this case, while light-emitting portions are located discretely in the light-emitting surface of the LDs 2, since the excitation light from each light-emitting portion is diffused about 35 to 45 degrees in a fast axis direction and about 10 degrees in a slow axis direction, the discreteness of the distribution of the excitation light is alleviated when it reaches the medium 1, so that the excitation distribution is substantially uniform.

However, such an LD excitation type solid-state laser has a problem that part of the excitation light is not absorbed by the medium 1 and passes through it, so that it is difficult to enhance the absorption efficiency of the excitation light. In order to increase the light absorption, the thickness of the medium 1 may be increased. In this case, however, the thermal stress occurring in the medium 1 may be increased beyond the fracture limit of the medium 1, resulting in a fracture accident. Furthermore, if the thickness of the medium 1 is increased, the excitation density in the medium 1 is reduced, from which a disadvantage is derived that the laser light cannot be efficiently extracted from a resonator.

An object of the invention is, by eliminating or reducing the above described problems of a conventional LD excitation slab type solid-state laser, to realize a substantially uniform excitation distribution as well as enhancement of an absorbtion efficiency of excitation light into a laser oscillating medium.

According to the present invention, by disposing a flat plate shaped slab type solid-state laser oscillating medium inside an optical resonator and also by injecting excitation light into the slab type solid-state laser oscillating medium, an LD excitation slab type solid-state laser which generates a laser light has the following improved configurations.

Specifically, filler strips each having a substantially semi-cylindrical shape are disposed on both sides of the slab type solid-state laser oscillating medium, and the slab type solid-state laser oscillating medium and the filler strips are surrounded by a cylindrical flow tube. Furthermore, the slab type solid-state laser oscillating medium, the filler strips, and the flow tube are surrounded by a reflecting surface, and a window is formed at a portion in the reflecting surface.

A semiconductor laser is disposed in the vicinity of the window and a condenser lens is disposed between the semiconductor laser and the window so that the excitation light passes through the window via the condenser lens and is injected into a region surrounded by the reflecting surface. The injected light is absorbed by the slab type solid-state laser oscillating medium.

As the condenser lens, a cylindrical lens can be used. In addition, a notch of the shape of a convex surface may be formed in a curved portion of the filler strip of the substantially cylindrical shape to correct an optical path of light passing through the portion, thereby adjusting the condition of the excitation distribution. The notch may be a recess that is a concave surface, or a series of grooves like saw teeth. A suitable material for the reflecting surface is ceramic. Furthermore, an outer surface of the flow tube preferably has a property of scattering the excitation light.

In the present invention, since the excitation light emitted from the semiconductor laser is guided to the window through the condenser lens such as a cylindrical rod lens (more generally, optical condenser system), the proportion of the area of the window to the area of the reflecting surface surrounding the slab type solid-state laser oscillating medium, the filler strips, and the flow tube can be sufficiently reduced.

Therefore, the light once injected into the region surrounded by the reflecting surface of a high reflectance is efficiently confined in the region and travels in various directions in the region. In the course of the travel, the light passes through various portions of the slab type laser oscillating medium over and over, and is partly absorbed by the medium each time it passes therethrough, thereby contributing the laser excitation. As a result, a uniform and efficient excitation is attained as a whole.

Furthermore, by forming a notch of the shape of a convex surface or a series of grooves like sawteeth in the curved portion of the filler strip, it is possible to correct the optical path of the light passing through the portion to adjust the distribution of the excitation light that reaches the laser oscillating medium, thereby providing a more uniform excitation distribution.

According to another preferred aspect, a surface of the flow tube or the reflecting surface of a high reflectance surrounding the laser oscillating medium and the like has an optical diffusion property to further increase the variety of the optical path of the excitation light, thereby reducing the lack of uniformity in the intensity distribution of the excitation light in the region surrounded by the reflecting surface. For example, even if there is lack of uniformity in the emission distribution of the LD, since most of the excitation light is diffused and then absorbed by the laser oscillating medium, lack of uniformity is prevented from occurring in the absorption.

According to the present invention, in the LD excitation slab type solid-state laser, the excitation light can be absorbed efficiently by the laser oscillating medium. In addition, the uniformity of the excitation distribution is easily enhanced, the thermal lens effect in the laser oscillating medium is suppressed, and laser light of a high power and high beam quality can be obtained with a high efficiency.

### BRIEF DESCRIPTION OF THE DRAWINGS

The above described and other features of the present invention will be apparent from the following description of the embodiments with reference to the accompanying drawings, in which:
Fig. 1 is a cross-sectional view of a laser according to a first embodiment of the present invention;
Fig. 2 is a cross-sectional view of a laser according to a second embodiment (and modification thereof) of the present invention;
Fig. 3 illustrates a general configuration of a light source with a high power semiconductor laser;
Fig. 4 is a cross-sectional view illustrating a configuration of a conventional lamp excitation slab type solid-state laser;
Fig. 5 shows a basic arrangement of a slab type solid-state laser, in which Fig. 5(a) is a cross-sectional view taken in a thickness direction, and Fig. 5(b) is a cross-sectional view taken in a width direction; and
Fig. 6 illustrates a configuration of a conventional LD excitation slab type solid-state laser.

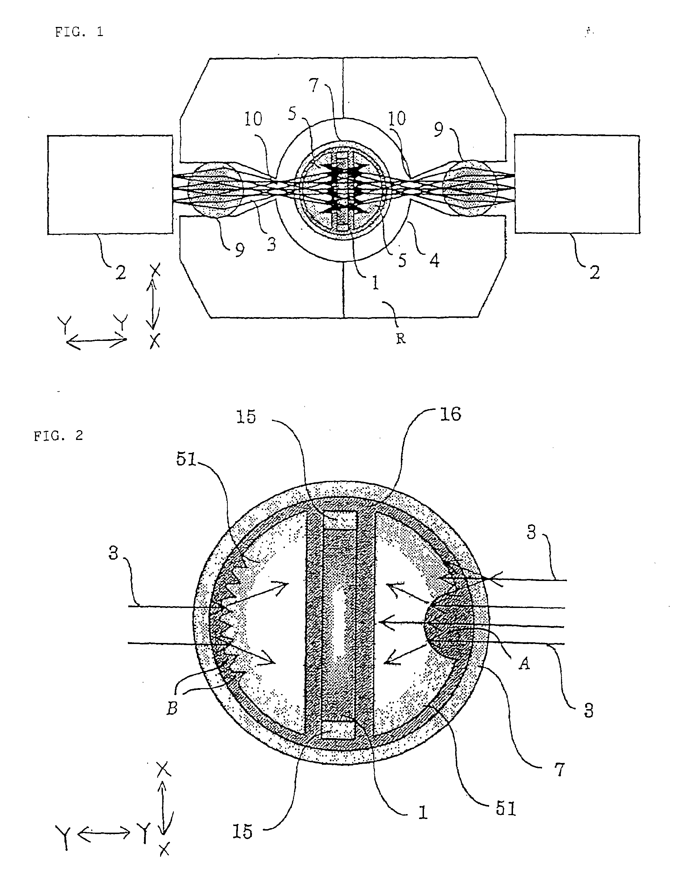

Embodiments of the present invention will be described below with reference to Figs. 1 to 3. In Figs. 1 to 3, components similar to those of the prior art shown in Figs. 4 to 6 are given the same reference numerals as those in Figs. 4 to 6.

First, basic parts of a slab type solid-state laser according to a first embodiment will be described with reference to Fig. 1.

The slab type solid-state laser of this embodiment, not shown in Fig. 1, has the same basic arrangement as that shown in Fig. 5, in which a slab type solid-state laser oscillating medium 1 is disposed in an optical resonator provided between a rear mirror and an output mirror.

Cooling water flows through the flow tube 7, and two filler strips 5 of substantially a semi-cylindrical shape are disposed on both sides in the thickness direction of the medium 1. The filler strip 5 itself has been already used in a conventional lamp excitation slab type solid-state laser, and is intended to promote heat exchange by reducing the sectional area of the channel for the cooling water flowing through the flow tube 7 to increase the flow velocity, thereby enhancing the cooling efficiency.

Here, a silica glass, which has a high transmittance to excitation light 3 and low coefficient of thermal expansion, is used for the filler strip 5 and the flow tube 7, for example.

A reflecting surface 4 of a high reflectance is disposed around the medium 1, the filler strips 5 and the flow tube 7. It is preferable that the reflecting surface 4 have an appropriate optical diffusion property, though it is allowable that the reflecting surface 4 be of a regular reflection type. For example, the whole or a part of the block R may be constituted by a ceramic member having an adequately rough surface (rough glossy surface) so that the rough surface may provide the light-diffusing reflecting surface 4.

Small windows (section for transmitting light) 10 are formed at portions of the reflecting surface 4, and condenser lenses (in the embodiment, cylindrical rod lens) 9 are provided for the respective windows 10. An LD 2 used as an excitation light source is arranged in the vicinity of the flow tube 7 such that the excitation light 3 can be condensed and guided to the window 10 through the rod lens 9 without loss.

This arrangement allows the excitation light 3 emitted from the LD 2 to pass through the condenser lens 9 provided between the LD 2 and the window 10 and the window 10 to be injected into the region surrounded by the reflecting surface 4.

The excitation light 3 reaches the medium 1, and then most of the light is absorbed by the medium 1 and the remainder is transmitted through it. Most of the transmitted light is incident on and reflected by the reflecting surface 4 of a high reflectance. Here, since the transmitted light travels while spreading out, it travels in various optical paths to be repeatedly incident on and reflected by the reflecting surface 4. In the course of this process, the transmitted light is given a chance to get into the medium 1 over and over, with the result that considerable amount of light is absorbed by the medium 1.

As a result, the absorption efficiency of the excitation light 3 as a whole (a proportion of the amount of light eventually absorbed by the medium 1 to the amount of light injected into the region surrounded by the reflecting surface 4) is enhanced. This advantage is primarily attributed to the configuration in which the excitation light 3 passes through the window 10 after it has been condensed by the condenser lens (in the embodiment, a cylindrical rod lens) 9 to reduce the cross-sectional area of the luminous flux.

If considering only the effect of optical confinement in the region surrounded by the reflecting surface 4, it may be supposed that such effect could be attained by arranging only the LD 2 in the above region, by referring to the case of the lamp excitation shown in Fig. 4. However, such arrangement would cause problems of degradation of performance and shortening of life due to irradiation of an intense excitation light to the LD (semiconductor laser) 2 itself or placement of the LD 2 in a high temperature environment. Furthermore, arrangement of the LD 2 as the excitation light source in the region surrounded by the reflecting surface 4 would prevent a smooth light irradiation onto the medium and disturb a (three dimensional) optical energy density in the region.

For avoiding such problems, in the present invention, a mechanism of injecting an excitation light into the region surrounded by the reflecting surface 4 from the exterior of the region is adopted, and the effect of optical confinement in the region is scarcely degraded by the combination of the condensing means (in the embodiment, cylindrical rod lens 9) and the small windows 10 formed in the reflecting surface 4.

In order to keep the effect of optical confinement at a high level, it is advantageous to minimize the proportion of the area of the window 10 to that of the reflecting surface 4. In a practical design, however, it is preferable that the divergence of the luminous flux is prevented by the rod lens 9 so that the cross-sectional area of the luminous flux may be reduced as small as possible, and the window 10 has a size small enough for allowing the whole of the excitation light 3, of which the cross-sectional area of the luminous flux has been reduced, to pass through. From a different viewpoint, a condenser lens 9, which has a condensing power for allowing a luminous flux capable of passing through the small window 10 without loss to be generated, is selected.

Here, a general configuration of a light source with an LD will be briefly described with reference to Fig. 3. Fig. 3(a) shows one light source (corresponding to one LD 2 shown in Fig. 1). The light source has a configuration in which many device units shown in Fig. 3(b) are integrated. As shown in Fig. 3(b), each of the device units comprises a cooler (heat sink) 12 and an LD bar 11, having a length L of 1 cm, mounted on the cooler 12, and they are typically integrated in one direction.

In such a configuration, the light emitted from the LD light source shown in Fig. 3(a) has different divergence angles dependent on the fast axis direction 13 or the slow axis direction 14. In addition, the direction of integration and the fast axis direction 13 are generally consistent with each other. The divergence angle of the traveling direction of the light emitted from the LD in the fast axis direction 13 (generally consistent with the direction of integration) is about 35 degrees in full width at half maximum. On the other hand, the divergence angle of the traveling direction of the light emitted from the LD in the slow axis direction 14 (generally consistent with the thickness direction of the LD light source) is about 10 degrees in full width at half maximum.

Therefore, in the case where the integrated LD light source is used as the excitation light source of the slab type solid-state laser oscillating medium, it is advantageous to make the direction of integration (fast axis direction 13) of the device units (Fig. 3(b)) be consistent with the longitudinal direction (direction perpendicular to the sheet of Fig. 1) of the medium 1 in efficiently transmitting the excitation light 3 to the medium 1.

For condensing the excitation light diverging within the range of about 10 degrees in the slow axis direction, it may be supposed to use a cylindrical lens, of which one surface is a cylindrical surface curved with respect to the slow axis direction 14 and of which the other surface is a flat surface. But, for further reducing the width of the condensed light, it is preferable to use a lens having a cylindrical portion of large curvature and a short focal length.

Considering the fact that the excitation light is emitted with a divergence angle from the emission area of a length (length L in Fig. 3(b)) of about 1 cm, a lens of which both surfaces are convex (so-called biconvex lens) is suitable for reducing the width of the condensed light as far as possible.

A calculation of the condensing performance in the case where a cylindrical rod lens is used indicates that the light emitted from a location of width of 1 cm and diverging within the range of 10 degrees can be condensed to a width of 3 mm or narrower. In addition, as one method for increasing the power of the solid-state laser by increasing the total amount of excitation light to be injected, it is conceivable to increase the number of the windows 10 and then arrange the condenser lenses 9 and the LDs 2 for each window 10.

On the other hand, the uniformity of the excitation distribution in the medium 1 is affected by a geometric factor such as an inner diameter of the rod lens 9, a distance between the LD 2 and the rod lens 9, a distance between the rod lens 9 and the medium 1, a shape of the flow tube 7, a shape of the medium 1, or a shape of the filler strip 5. Therefore, in designing, it is preferable that these factors are appropriately determined in order to enhance the uniformity of the excitation distribution.

Theoretically, an optical system for focusing the excitation light 3 emitted from the LD 2 onto the medium 1 may be constituted by the rod lens 9, flow tube 7, filler strip 5, and cooling water 16. Here, it is necessary to carry out the focusing with a uniform intensity on the medium 1, and if the distribution of emission intensity of the emission surface of the LD 2 is uniform, and this uniform distribution is transferred to the distribution in the width direction on the medium 1, then it can be expected that a substantially uniform excitation distribution is obtained.

Actually, however, even if the emission intensity of the emission surface of the LD 2 can be considered to be uniform (or flat), there is a factor for preventing mapping onto the medium 1 while maintaining the uniformity (flatness), on the side of the optical system. In other words, as this optical system includes several optical elements of a cylindrical shape, it is difficult to obtain a perfect focusing. In almost all possible optical systems, an excitation distribution in the width direction of the medium 1 shows high in its center region and low in its peripheral region.

Such a mode of the excitation distribution can be recognized indirectly by measuring a small signal gain within the medium 1, and the above-described excitation distribution can be confirmed by an actual measurement. A second embodiment described below with reference to Fig. 2 is intended to provide a technique that can reduce such lack of uniformity of the excitation distribution as described above.

Now, a configuration of basic parts of a slab type solid-state laser according to the second embodiment will be described with reference to the cross-sectional view of Fig. 2.

Fig. 2 shows a cross section of a flow tube 7 and the interior structure in a laser according to this embodiment. Since the construction and arrangement of the outside of flow tube 7 (reflecting surface with windows, condenser lens, LD or the like) are the same as that of the first embodiment shown in Fig. 1, they are not shown and the description thereof is omitted.

A flow tube 7 for cooling a slab is arranged at the center of the cross section perpendicular to the optical axis of the optical resonator. The medium 1 is housed in the flow tube 7 at the central part thereof in a manner such that the width direction of the medium 1 is consistent with the X-X direction shown in Fig. 2.

Cooling water flows through the flow tube 7, and two filler strips 51 of substantially a semi-cylindrical shape are disposed on both sides in the thickness direction (Y-Y direction shown in Fig. 2) of the medium 1. A silica glass, which has a high transmittance of the excitation light 3 and low coefficient of thermal expansion, for example, is used for the filler strip 51 and the flow tube 7. As in the first embodiment, a reflecting surface of a high reflectance (not shown) is disposed around the medium 1, the filler strips 51 and the flow tube 7. On both sides in the width direction of the medium 1, heat insulators 15 made of quartz are disposed so as to be contact with the medium.

The structure shown in Fig. 2 is different from that shown in Fig. 1 (first embodiment) in that the filler strip 51 has a notch formed in its curved portion. The notch is intended to correct an optical path of the light passing through the curved portion of the filler strip 51, in particular, a traveling direction of the refracted light. As shown in Fig.2, the notch typically has a shape of a recess A, which is a concave surface, or a series of grooves B like sawteeth.

By providing the recess A, the excitation light is prevented from being intensively incident on the center portion in the width direction of the medium 1, and accordingly the refracted excitation light is distributed to the peripheral regions in the width direction. As a result, the excitation distribution becomes flattened. Alternatively, if the series of grooves B like sawteeth is used, the number of factors that can be adjusted in a design stage such as a shape or inclination of a slope of the groove, a depth of the groove, a position where the grooves are formed, or the density of the formed grooves is increased, so that the excitation distribution can be controlled more precisely.

For example, it is conceivable to adopt a method in which , at first, excitation distribution is roughly prevented from concentrating on the center portion by means of the recess A, and then a desired excitation distribution is attained by mean of fine adjustment using the series of grooves B.

By attaining uniformity of the excitation distribution in this way, the thermal lens effect, which inevitably could not be eliminated only by the heat insulators 15 disposed at both ends of the medium 1 so as to be contact with the medium, can be significantly suppressed.

In a practical design, by controlling the excitation distribution according to the method described above and setting the excitation density at the peripheral regions of the heat insulators 15 to be a little higher than that at the center portion, the temperature distribution in the width direction can be made substantially uniform to substantially eliminate the thermal lens effect.

In both of the first and second embodiments described above, if an optical diffusion property is added to the surface (outer surface, in particular) of the flow tube 7, the (three dimensional) optical energy density in the region surrounded by the reflecting surface 4 becomes more uniform. Furthermore, even if the uniformity of the emission distribution is degraded due to degradation of the LD 2 after being driven for a long time or the like, the uniformity of the excitation distribution in the medium 1 can be prevented to a certain extent from being degraded accordingly. In order to add the optical diffusion property thereto, a well-known process for adding the optical diffusion property such as a graining process can be used.

## Claims

1. A laser diode excitation slab type solid-state laser in which a slab type solid-state laser oscillating medium having a flat shape is disposed in an optical resonator, and laser light is generated by injecting excitation light into the slab type solid-state laser oscillating medium, comprising:
filler strips each having a substantially semi-cylindrical shape and disposed on either side of said slab type solid-state laser oscillating medium;
a flow tube that surrounds said slab type solid-state laser oscillating medium and said filler strips;
a reflecting surface that surrounds said slab type solid-state laser oscillating medium, said filler strips, and said flow tube;
a window formed at a portion in said reflecting surface;
a semiconductor laser for emitting said excitation light that is disposed in the vicinity of said window; and
a condenser lens disposed between said semiconductor laser and said window,
wherein said excitation light passes through said window via said condenser lens and is injected into a region surrounded by said reflecting surface.

2. The laser diode excitation slab type solid-state laser according to claim 1,
wherein said condenser lens is a cylindrical lens.

3. The laser diode excitation slab type solid-state laser according to claim 1 or 2, wherein, in a curved portion of said filler strip of the substantially cylindrical shape, a notch for correcting a path of light passing through said curved portion is provided.

4. The laser diode excitation slab type solid-state laser according to claim 3,
wherein said notch includes a recess that is a concave surface.

5. The laser diode excitation slab type solid-state laser according to claim 3,
wherein said notch includes a series of grooves like sawteeth.

6. The laser diode excitation slab type solid-state laser according to any preceding claim, wherein said reflecting surface is made of ceramic.

7. The laser diode excitation slab type solid-state laser according to any preceding claim, wherein an outer surface of said flow tube has a property of scattering said excitation light.
